Europäisches Patentamt

European Patent Office

Office européen des brevets

(11) Publication number: **0 173 637**

**B1**

## (12) EUROPEAN PATENT SPECIFICATION

(45) Date of publication of patent specification: **01.06.88**

(21) Application number: **85630133.8**

(22) Date of filing: **21.08.85**

(51) Int. Cl.⁴: **F 16 B 39/286**

(54) Lock nut.

(30) Priority: **27.08.84 US 644417**

(43) Date of publication of application:
**05.03.86 Bulletin 86/10**

(45) Publication of the grant of the patent:
**01.06.88 Bulletin 88/22**

(84) Designated Contracting States:
**BE DE FR GB IT LU NL**

(56) References cited:
**DE-A-1 802 372**
**DE-A-2 055 937**
**DE-B-1 811 370**
**US-A-3 702 628**

(73) Proprietor: **REXNORD INC.**
**350 N. Sunny Slope Road**
**Brookfield, WI 53005 (US)**

(72) Inventor: **Cosenza, Frank J.**
**1524 West Fifth Street**
**San Pedro California 90732 (US)**
Inventor: **Warkentin, Roy L.**
**1964 West 259th Place**
**Lomita California 90717 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

**Description**

The present invention relates to lock nuts having a plurality of resilient locking segments which deflect in a manner similar to that of a beam, and more particularly the invention relates to a construction of the locking segments such that the nut is self-cleaning with respect to the slotted area between adjacent locking segments.

The present invention is an improvement in the design of the patented "LOCK NUT MEMBER" described in US—A—3,702,628 issued on November 14, 1972 to Frank J. Cosenza. Subsequent to that invention it was determined that the performance of the lock nut, as well as other lock nuts of similar function, is affected by debris which accumulates in the slotted area between the opposing side walls of adjacent locking segments or beams, as they will hereinafter be referred to. Debris, e.g., oil, dirt, etc., which for a variety of reasons is found in the environment in which the lock nut is used, is extruded or removed from the interior of the lock nut by the threading action of the nut and bolt pushing the debris outwardly into the slotted areas between the locking beams. With the essentially parallel orientation of the opposing side walls of adjacent beams, the debris often remains within the slotted area unless physically removed by an outside force. Eventually the slot becomes filled and adversely affects the resilient nature of the locking beams. This situation is aggravated when the nut is used in a high temperature environment. Depending on the composition of the debris, high temperatures may cause the debris to harden and, as a result, force the beams to remain in an open position despite the removal of the bolt. High temperatures often are not necessary to cause this aggravated condition as a sufficient accumulation of debris particles forced into the slotted area will cause the beams to remain open. Accordingly, the beams lose their locking ability because the debris does not allow them to return fully to their natural locking position.

It has been found that physically cleaning each slot in the nut after disassembly of the fastener is not a practical solution for the industry and replacing clogged nuts is not desirable from a cost standpoint. The present invention provides a beam construction and arrangement which is self-cleaning and thus answers this particular need of the industry.

In the present invention the plurality of beams in the lock nut are designed such that opposing side walls of adjacent beams diverge with respect to each other. With this construction, as debris accumulates in the slotted area between adjacent beams, movement of the beams in combination with the diverging wall portions creates an ejecting force upon the debris. Such action moves the debris in a direction outwardly from the nut interior. In this manner, the nut become self-cleaning.

A more thorough understanding of the present invention will be gained by reading the following description of the preferred embodiments with reference to the accompanying drawings in which:

Figure 1 is a view in perspective of a lock nut embodying a first embodiment of the present invention.

Figure 2 is a side elevational view of the lock nut shown in Fig. 1.

Figure 3 is a top plan view of the lock nut shown in Fig. 2.

Figure 4 is a side elevational view of the lock nut of Fig. 1 with an externally threaded member locked therein.

Figure 5 is a top plan view of the lock nut of as shown in Fig. 4 with the externally threaded member not shown.

Figure 6 is an enlarged view of a portion of the lock nut shown in Fig. 5.

Figure 7 is a top plan view of a portion of what is shown in Fig. 3.

Figure 8 is a view in perspective of a lock nut embodying a second embodiment of the present invention.

Figure 9 is a side elevational view of the lock nut shown in Fig. 8.

Figure 10 is a top plan view of what is shown in Fig. 9.

Figure 11 is a side elevational view of the lock nut of Fig. 8 with an externally threaded member locked therein.

Figure 12 is a top plan view of the lock nut as shown in Fig. 11 with the externally threaded member not shown.

Figure 13 is an enlarged view of a portion of the lock nut shown in Fig. 12.

Figure 14 is a top plan view of a portion of what is shown in Fig. 10.

In the drawings, like reference numerals are used to indicate identical or like elements.

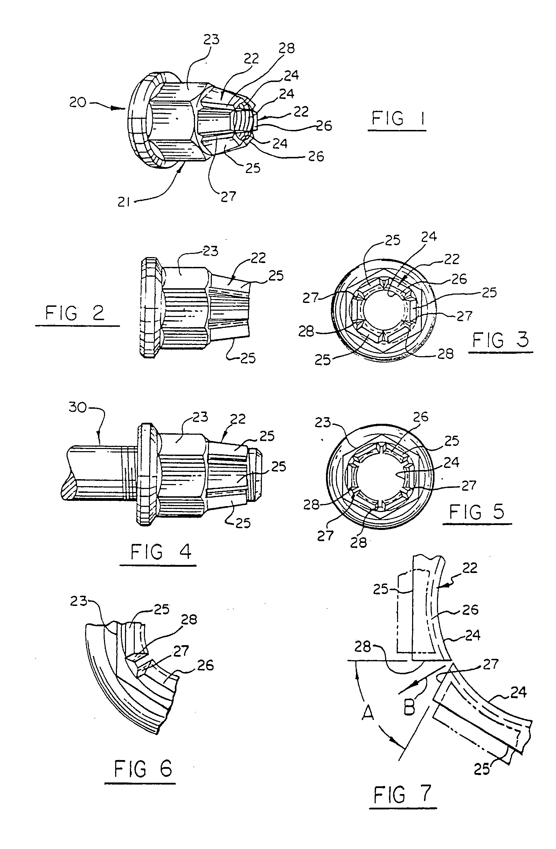

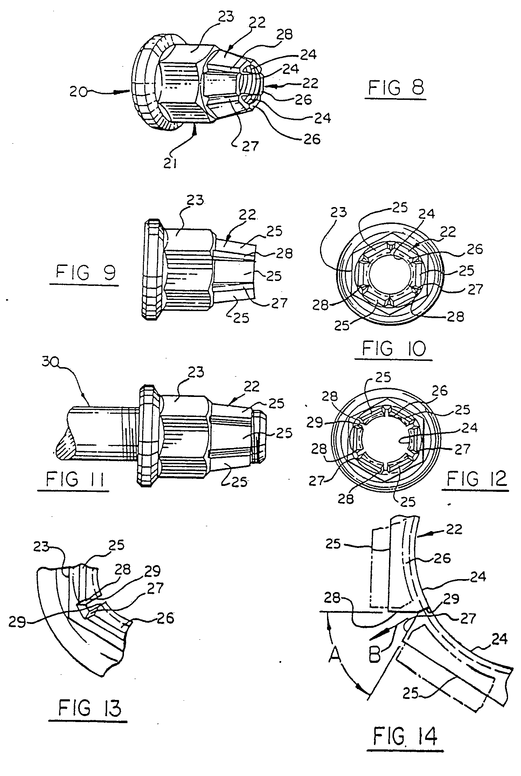

The present invention is an improvement in the construction and operation of known lock nuts, and in particular of the lock nut member shown and described in US—A—3,702,628. Lock nuts of this nature are generally of a one-piece construction. Each lock nut 20 has a nondeflectable or rigid body portion 21 and a plurality of locking segments or beams 22. Each beam is formed integrally with the body portion 21 and extends axially therefrom as can be seen in Figs. 1, 2, and 4 illustrating a first embodiment of the present invention and in Figs. 8, 9, and 11 which illustrate a second embodiment. The body portion 21 has an internal axial opening extending therethrough. See Figs. 3 and 10. The opening is threaded so as to receive the external threads of a bolt or like part of a fastener. The body portion 21 may also have a plurality of wrench flats 23 along its external surface.

Two embodiments of the present invention will be described. In the drawings, each lock nut has six locking beams; however, it should be understood that the invention is not limited to any specific number of locking beams.

Each locking beam 22 has an inner surface 24. The plurality of locking beams 22 are arranged circumferentially at one end of the body portion 21 such that the inner surfaces 24 define a bore which is threaded and in communication, i.e., axially aligned, with the opening of the body portion 21. Opposite the inner surface 24 of each beam 22 is an outer surface 25 which is preferably flat. See Figs. 1, 2 and 4. A top, typically flat, surface 26 extends between the inner and outer surfaces 24, 25 and defines a free end of the beam.

Each locking beam also has a first side wall 27 and a second side wall 28. Each of these side walls extends between the body portion 21 and the inner, outer and top surfaces 24, 25, 26 respectively of the beam. Preferably both side walls are smooth or flat. In both embodiments the side walls are constructed so that at least a portion of each is oriented so as to diverge in a direction away from the side wall of the beam immediately adjacent to it.

In the first embodiment of the invention as shown in Figs. 1—7, the entire side wall 27, 28 is oriented so that no portion of it is parallel to any portion of the side wall of the adjacent beam. Hence, the entire side wall 27, 28 is angularly disposed such that if the planes containing adjacent side walls of adjacent beams were extended so as to intersect, the included angle A defined by the intersecting planes would be less than ninety degrees and preferably approximately sixty degrees.

The construction of the second embodiment shown in Figs. 8—14 differs from that of the first embodiment in that a portion 29 of each beam's side walls 27, 28 which is closest to the inner surface 24 is constructed so as to be parallel with a like portion of the side wall of the beam immediately adjacent thereto. This may be best viewed in Figs. 13 and 14. The included angle A defined by the intersecting planes of the non-parallel portions 27, 28 of the two adjacent beams is again less than ninety degrees and preferably sixty degrees.

To manufacture the lock nuts embodying the present invention, known methods of machining and heading the nuts may be used to form the body portion as well as the plurality of beams. It is believed no special tools or any modification of conventional machines is required to form the nuts as described in this application.

In view of the foregoing description, the unique selfcleaning operation of the present invention may now be appreciated. In Figs. 1—3 and Figs. 8—10 the lock nuts are shown as they appear in a free state prior to the insertion of an externally threaded member 30 therein. It can be seen that in both embodiments the innermost portions of the beam side walls are closely situated to adjacent beam side walls. As an externally threaded member 30 is threaded into the lock nut and secured therein as shown in Figs. 4 and 11, the beams deflect outwardly in the manner shown in Figs. 5 and 12. Upon removal of the externally threaded member 30, each of the beams returns to its original free state by flexing inwardly in the

manner illustrated in Figs. 1—3 and 8—10. The movement of the beams between a free state and a locking state is schematically illustrated in Figs. 7 and 14. In the expanded or locking stage the beams are illustrated by phantom or broken lines. The arrow B symbolizes the resulting direction of force which is exerted by the opposing side walls of adjacent beams upon any debris contained therebetween. As can be appreciated by one skilled in the art such a force will act in an outwardly direction to expel or eject accumulated debris from between the opposing beam side walls 27, 28. This force in combination with the diverging orientation of the opposing side walls effectively cleans the nut of debris accumulated in this area. The present invention thus eliminates the clogging problems of accumulated debris trapped and compacted between the parallel, opposing side walls of prior art lock nuts.

## Claims

1. A lock nut adapted to receive an externally threaded member, the lock nut (20) having a substantially nondeflectable body portion (21) with an internal surface defining an opening extending therethrough and threaded for receiving the external threaded member, the lock nut (20) further having a plurality of locking beams (22) extending from the body portion (27) and arranged circumferentially to define a bore in communication with the opening in the body portion (21);

each of the locking beams (22) having an inner surface (24) defining a portion of the bore, an outer surface (25) facing in a direction opposite said inner surface (24), a top surface (26) defining a free end of said beam (22) and extending between said outer and inner surfaces (24, 25), a first side wall (27), and a second side wall (28);

each of said side walls (27, 28) extending between said outer surfaces (25) said inner surface (24) said top surface (26) and the body portion (21) of the lock nut (20) characterized in that each of said side walls (27, 28) is constructed and arranged such that at least a portion of said respective side wall (27, 28) proximate said outer surface (25) diverges in a direction away from a like side wall of a like locking beam (22) adjacent thereto.

2. The lock nut of claim 1, wherein opposing side walls (27, 28) of adjacent locking beams (22) are arranged such that an included angle defined by intersecting plane extensions of said respective side walls (27, 28) is less than ninety degrees.

## Patentansprüche

1. Sicherungsmutter zum Aufnehmen eines mit Außengewinde versehenen Teils, wobei die Sicherungsmutter (20) einen im wesentlichen unbiegsamen Hauptteil (21) mit einer inneren Oberfläche hat, die eine Öffnung bildet, welche sich durch ihn erstreckt, und mit Gewinde zum Aufnehmen des mit Außengewinde versehenen Teils versehen ist, wobei die Sicherungsmutter (20) weiter mehrere Sicherungsarme (22) hat, die sich von dem Hauptteil (21) aus erstrecken und umfangsmäßig angeordnet sind, so daß sie eine Bohrung bilden, die mit der Öffnung in dem Hauptteil (21) in Verbindung steht;

wobei jeder Sicherungsarm (22) eine innere Oberfläche (24) hat, die einen Teil der Bohrung bildet, eine äußere Oberfläche (25), die in eine Richtung weist, welche zu der inneren Oberfläche (24) entgegengesetzt ist, eine obere Fläche (26), welche ein freies Ende des Arms (22) bildet und sich zwischen der äußeren und der inneren Oberfläche (24, 25) erstreckt, eine erste Seitenwand (27) und eine zweite Seitenwand (28);

wobei sich jede Seitenwand (27, 28) zwischen der äußeren Oberfläche (25), der inneren Oberfläche (24), der oberen Oberfläche (26) und dem Hauptteil (21) der Sicherungsmutter (20) erstreckt, dadurch gekennzeichnet, daß jede Seitenwand (27, 28) so aufgebaut und angeordnet ist, daß wenigstens ein Teil der Seitenwand (27, 28), welcher nahe der äußeren Oberfläche (25) ist, in Richtung weg von einer gleichen Seitenwand eines benachbarten gleichen Sicherungsarms (22) divergiert.

2. Sicherungsmutter nach Anspruch 1, wobei die entgegengesetzten Seitenwände (27, 28) von benachbarten Sicherungsarmen (22) so angeordnet sind, daß ein eingeschlossener Winkel, der durch sich schneidende Ebenenverlängerungen der Seitenwände (27, 28) gebildet wird, kleiner als neunzig Grad ist.

**Revendications**

1. Contre-écrou destiné à recevoir une pièce extérieurement filetée, ce contre-écrou (20) comprenant une partie formant corps (21) qui ne peut sensiblement pas fléchir et qui offre une surface intérieure délimitant une lumière la traversant de part en part et filetée de façon à recevoir la pièce extérieurement filetée, ce contre-écrou (20) comportant en outre de multiples porte-à-faux de blocage (22) qui s'étendent à partir du corps (21) et sont agencés suivant une disposition circonférencielle de façon à délimiter un alésage qui communique avec la lumière ménagée dans le corps (21), chacun de ces porte-à-faux de blocage (22) offrant une surface intérieure (24) qui délimite une partie de l'alésage, une surface extérieure (25) tournée dans un sens opposé à cette surface intérieure (24), une surface de bout (26) qui constitue l'extrémité libre de ce porte-à-faux (22) et qui s'étend entre lesdites surfaces extérieure et intérieure (24, 25), une première paroi latérale (27) et une seconde paroi latérale (28), chacune desdites parois latérals (27, 28) s'étendant entre la surface extérieure (25), la surface intérieure (24), la surface de bout (26) et le corps (21) du contre-écrou (20), ce contre-écrou étant caractérisé en ce que chacune des parois latérales (27, 28) est réalisée et agencée d'une façon telle qu'au moins une partie de la paroi latérale considérée (27, 28) qui est proche de la surface extérieure (25) diverge dans un sens la faisant s'éloigner d'une paroil latérale analogue d'un porte-à-faux de blocage analogue (22) qui lui est adjacent.

2. Contre-écrou de la revendication 1, dans lequel des parois latérales en regard (27, 28) de porte-à-faux de blocage adjacents (22) sont agencées d'une façon telle qu'un angle inclus délimité par les prolongements, se recoupant, des plans des parois latérales considérées (27, 28) est inférieur à quatre-vingt-dix degrés.

FIG 1

FIG 2

FIG 3

FIG 4

FIG 5

FIG 6

FIG 7

1

0  173  637

FIG 8

FIG 9

FIG 10

FIG 11

FIG 12

FIG 13

FIG 14